(19) **Europäisches Patentamt**
**European Patent Office**
**Office européen des brevets**

(11) **EP 2 565 612 B1**

(12) **EUROPEAN PATENT SPECIFICATION**

(45) Date of publication and mention
of the grant of the patent:
**11.01.2017  Bulletin 2017/02**

(51) Int Cl.:
***B60L 5/20*** *(2006.01)*  ***G01L 1/04*** *(2006.01)*
***G01L 5/00*** *(2006.01)*

(21) Application number: **11774805.3**

(22) Date of filing: **13.04.2011**

(86) International application number:
**PCT/JP2011/059140**

(87) International publication number:
**WO 2011/136021 (03.11.2011 Gazette 2011/44)**

(54) **CONTACT FORCE MEASUREMENT METHOD AND CONTACT FORCE MEASUREMENT DEVICE**

KONTAKTKRAFTMESSVERFAHREN UND KONTAKTKRAFTMESSVORRICHTUNG

PROCÉDÉ DE MESURE DE FORCE DE CONTACT ET DISPOSITIF DE MESURE DE FORCE DE CONTACT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.04.2010   JP 2010104867**

(43) Date of publication of application:
**06.03.2013   Bulletin 2013/10**

(73) Proprietors:
• **Meidensha Corporation**
  **Tokyo 141-6029 (JP)**
• **Railway Technical Research Institute**
  **Kokubunji-shi, Tokyo 185-8540 (JP)**

(72) Inventors:
• **MATSUBARA Kazutaka**
  **Okayama 719-3201 (JP)**

• **FUJISAWA Takamasa**
  **Tokyo 141-6029 (JP)**
• **IKEDA Mitsuru**
  **Kokubunji-shi**
  **Tokyo 185-8540 (JP)**

(74) Representative: **Strehl Schübel-Hopf & Partner**
**Maximilianstrasse 54**
**80538 München (DE)**

(56) References cited:
**EP-A1- 2 244 056      JP-A- 11 136 804
JP-A- 2001 235 310    JP-A- 2002 328 063
JP-A- 2008 104 312    JP-A- 2009 244 023
JP-A- 2010 025 677**

## Description

## Field of the Invention

The present invention relates to a contact force measurement method and a contact force measurement device.

## Background of the Invention

In an electric train system, an electric collector device mounted on a roof of a train such as a pantograph and an overhead wire contact with each other so that electric power is supplied. A contact force is produced between the pantograph and the overhead wire. In the case that the contact force is varied so much, the pantograph would be released from the overhead wire. A discharge phenomenon called as "ark" is happened between the released pantograph and the overhead wire. If such an ark is happened, the overhead wire is worn away. On the contrary, in the case that the contact force is too large, the overhead wire is also worn away. Thus, it is preferable that the contact force is not varied so much.

In order to treat with a method for preventing an overhead wire from being released and an abrasion diagnose with respect to the overhead wire, it is expected to measure a value of a contact force. Patent document 1 as described below discloses that a frequency response function of a pantograph depending on a variation of contact force is previously measured and the contact force is calculated by convolution integrate with time series response of a moving pantograph and the frequency response function.

Patent document 2 as described below discloses a method for measuring contact force wherein sensors such as an acceleration meter, a strain gauge and so on are arranged at a pantograph. The contact force of the pantograph is obtained by measuring a spring reaction force and an inert force of the pantograph. Patent document 3 as described below discloses a method for measuring contact force of a pantograph wherein two pairs of upper and lower lighting sources such as LED are provided at a spring portion of the pantograph. The contact force of the pantograph is obtained by processing images of the light sources captured by a CCD camera and a relative displacement of the spring portion is detected. Thus, by detecting an elasticity of the spring, the contact force of the pantograph can be obtained.

Patent document 4 discloses a method for measuring a contact force of the pantograph wherein line sensor cameras (hereinafter, it is referred as "line sensors") are provided at a position above a roof portion of the pantograph and imaged of a spring portion of the pantograph is captured. By detecting a relative displacement by processing captured images, the elasticity of the spring is detected. Thus, the contact force of the pantograph is obtained. However, the patent document 4 does not disclose how captured images are processed in detail.

Patent document 5 discloses a method for measuring a displacement of a pantograph wherein a striped marker of which some parts are high light reflective regions and the remained parts are low reflective regions is mounted at the pantograph and line sensors are arranged at a roof portion of a train body in order to photographs images of the marker along a vertical direction. By detecting a position of the marker with a pattern matching, the displacement of the pantograph is detected.

In the patent document 5, time series images recorded per every time unit by scanning along a vertical direction are approximately compared with a marker pattern corresponding to striped design in order to judge whether the images are coincident with the marker pattern or similar to the marker patter. Thus, even if the images are recorded under sun shine, the pattern-like images can be distinguished from the others. Even if brightness is dynamically changed at a photographing moment, for example, in the case that a train runs into/out a tunnel, the time series images can be obtained. In accordance with the method disclosed in the patent document 5 as described below, a relative displacement of a pantograph and a spring elasticity can be detected.

Patent document 6 discloses a device for measuring the contact force of the pantograph by recording an image of a marker attached to the pantograph. The document focuses on the problem of calculating the pantograph displacement even when the imaging sensor is inclined.

## Prior Document

## Patent Document

Patent document 1: Japanese Patent Unexamined Publication No.11-194059
Patent document 2: Japanese Patent Unexamined Publication No.2004-301591
Patent document 3: Japanese Patent Unexamined Publication No.2001-235310
Patent document 4: Japanese Patent Unexamined Publication No.2008-185457
Patent document 5: Japanese Patent Unexamined Publication No.2008-104312
Patent document 6: JP 2009 244 023 A

## Summary of the Invention

## Subject to be resolved by the Invention

However, for example, in the case of arranging sensors on a pantograph in the method disclosed in the patent document 2, some special processes are necessary for providing wire harness and holes through which a wire is passed. Further, in the case of arranging the LED disclosed in the patent document, it is necessary for a pantograph to process some steps for mounting the LED and a battery source for the LED.

In the contact force measurement method disclosed in the patent document 4, a contact force is measured by processing recorded images without contacting with a pantograph. It is unnecessary to process the pantograph. Thus, its method can be broadly applicable. However, in this method, it is necessary to detect displacements of an upper portion and a lower portion of springs so as to calculate elasticity of the springs, it is necessary to record markers attached to the upper and lower portions of the springs by line sensor cameras.

In the method disclosed in the patent documents 3 and 4, the upper and lower portions of the springs can be observed from an exterior area. In the case of a conventional pantograph of which the upper and lower portion of the springs can be recorded by line sensor cameras, there is no problem to apply these methods. However, in the case of a pantograph of which a ship-shaped body (pantograph head) and a spring cannot be directly recorded, the upper and lower portion of the spring cannot be observed from an exterior area. In the case of the methods disclosed in the patent documents 3 and 4, there is a problem not to measure a contact force of a pantograph unless the ship-shaped body and the springs can be directly recorded.

Upon considering the above drawbacks, the present invention provides a contact force measurement method for measuring a contact force of a pantograph by processing images in the case of the pantograph of which a ship shaped body and a spring cannot be directly recorded and its contact force measurement device.

**Means to Solve the Subject**

To resolve the above drawbacks, the invention provides a contact force measurement method and a contact force measurement device in accordance with the appended claims.

**Effect of the Invention**

According to the present invention, even if a ship-shaped body (pantograph head) and springs of a pantograph cannot be directly photographed or recorded, the contact force measurement method and its contact force measurement device can detect a contact force of the pantograph by processing photographed or recorded images.

**Brief Description of the Drawings**

[Fig. 1] Fig. 1 shows a sketch of a construction of a contact force measurement device according to the first embodiment of the present invention.

[Fig. 2] Fig. 2 is a flow chart for showing processes of a contact force measurement method according to the first embodiment of the present invention.

[Fig. 3] Fig. 3 shows a sketch of a spring virtually combined in the first embodiment.

[Fig. 4] Fig. 4 shows a sketch for showing where markers according to the first embodiment are located.

[Fig. 5] Fig. 5 shows a sketch of a construction of a contact force measurement device according to the second embodiment of the present invention.

[Fig. 6] Fig. 6 is a flow chart for showing process of a contact force measurement method according to the second embodiment of the present invention.

[Fig. 7] Fig. 7 shows an example of a method for reducing a number of line sensor bases by a linear prediction of positions of makers according to the second embodiment.

[Fig. 8] Fig. 8 shows a sketch of an example of a relative displacement by a contact force measurement device according to the third embodiment of the present invention.

[Fig. 9] Fig. 9 is a sketch for showing an example how a ship-shaped body is bent by elastic vibration in a contact force measurement device according to the third embodiment.

[Fig. 10] Fig. 10 shows a sketch of an example that a ship shaped body and a spring portion of a pantograph can be directly photographed.

**Embodiment to practice the Invention**

The embodiments to practice a contact force measurement method according to the present invention will be described with reference to the accompanying drawings.

Embodiment 1

A contact force measurement method and a contact force measurement device according to the first embodiment of the present invention will be described. In the contact force measurement method and the contact force measurement device according to the first embodiment, even if a collector head having a ship-shaped body (pantograph head) and a spring member of a pantograph cannot be directly photographed, the resent embodiment is characterized in that a contact force of the pantograph can be measured by a non-contact measurement method with an observation of a relative displacement at a central portion of the pantograph and acceleration at three points. (pantograph head)

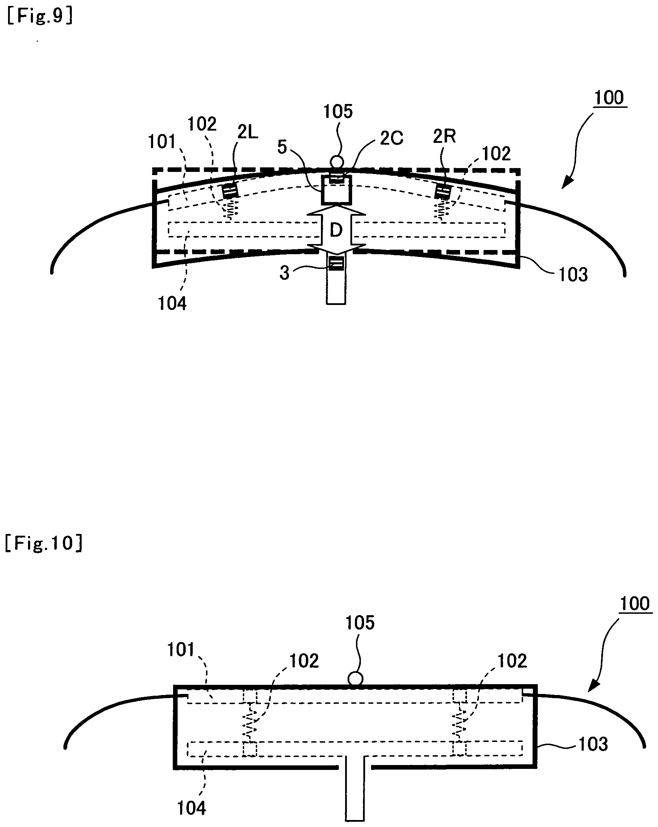

Fig. 10 shows a sketch of a situation that the ship shaped collector head and a plurality of springs 102 of a pantograph cannot be directly photographed. As shown in Fig. 10, a ship-shaped body 101 and a spring portion 102 of a pantograph 100 are protected by a cover 103. Under the construction, an upper end of the ship-shaped body 101 and an upper end of the cover 103 are connected each other. If any force is applied on the upper end of the cover 103, the ship-shaped body 101 is linked with the cover 103 so that the ship-shaped body 101 and the cover 103 are displaced.

However, a collector head support member 104 (pantograph head support member) is not directly connected to the cover 103. The support member is not smoothly moved relative to the displacement of the cover 103. Therefore, even if a maker is simply adhered on a position of a surface of the cover 103 beyond a position where the spring member 102 is located, the maker is also displaced with the cover 13. An elasticity of the spring member 102 cannot be measured.

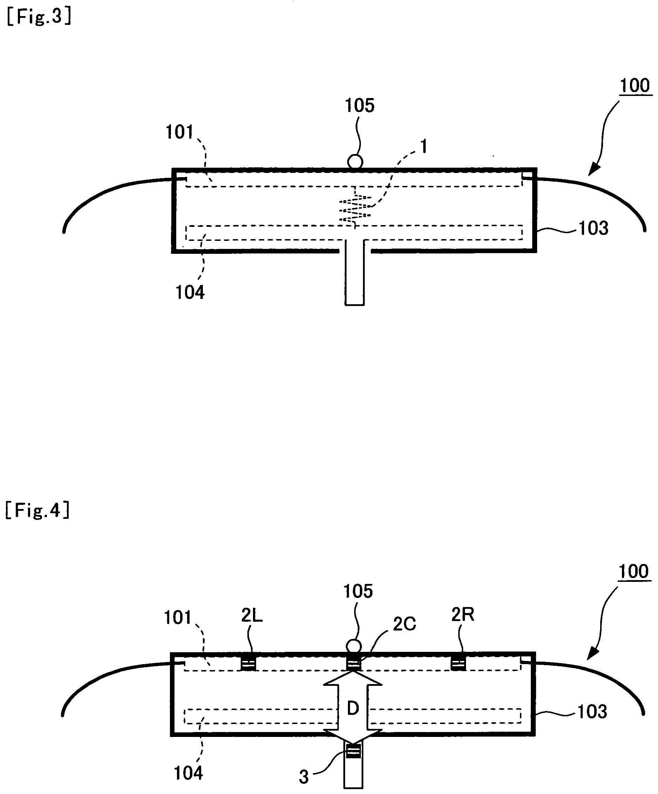

Therefore, in the contact force measurement method according to the embodiment, as shown in Fig. 3, right side and left side springs 102 are virtually combined so that a combined spring 1 is deemed to be located at the center of ship-shaped body 101 along a width direction. As shown in Fig. 4, an upper central maker 2C is mounted on an upper central portion of a cover 103 (corresponding to the ship-shaped body 101). At the both sides of the cover 103 along the width direction, a left side upper marker 2L and a right side upper marker 2R is mounted, respectively. A lower maker is mounted on a lower central portion of the cover 103 corresponding to the ship-shaped support member 104.

A relative displacement between the upper central portion of the cover 103 (corresponding to the ship-shaped body 1) and the central portion of the ship-shaped body support member 104 is calculated in order to compute an elasticity of a virtual combined spring 1. Herein, as shown an arrow D in Fig. 4, the relative displacement indicates a positional gap between a position of the upper central marker 2C and the lower marker 3.

By computing a difference between a displacement of the virtual combined spring 1 without an elastic force (a natural length) and the detected relative displacement, an elasticity of the virtual combined spring 1 can be detected. A spring reaction force can be detected by multiplying a combined spring constant with the detected elasticity of the virtual combined spring 1.

In the present embodiment, although the pantograph 100 in which the ship-shaped body 101 is supported by two left- and right- springs 102, a pantograph in which a ship-shaped body 101 is supported by springs 102 which are more than two springs is also applicable to compute an elasticity of a virtual combined spring 1.

In the present embodiment, although the ship-shaped body 101 and the spring portion 102 cannot be directly photographed, the contact force measurement method and the contact force measurement device according to the present embodiment are also applicable to a conventional pantograph in which a ship-shaped body 101 and a spring portion 102 are directly photographed.

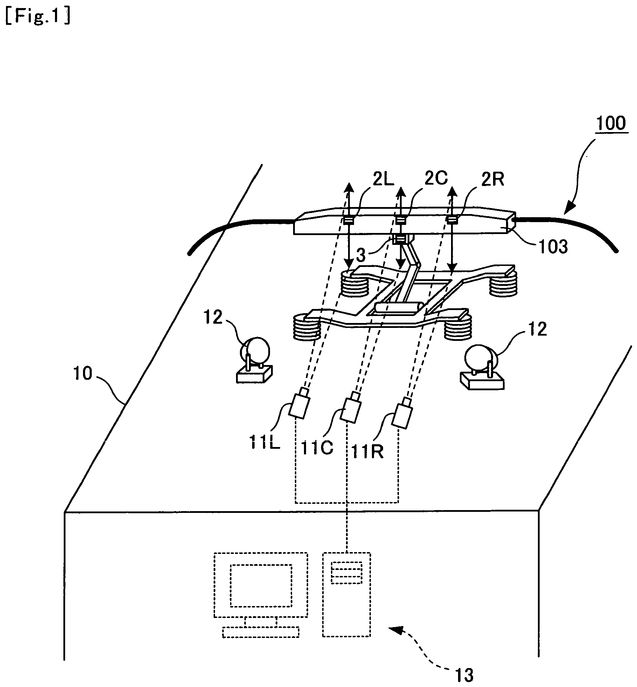

Fig. 1 shows a sketch of a construction of the contact force measurement device according to the first embodiment of the present invention. In the contact force measurement device according to the present embodiment as shown in Fig. 1, line sensors 11L, 11C and 11R are mounted on a train body 10 and a lighting device 12 is provided at a position near the sensors.

As shown in Fig. 1 and Fig. 4, a non light-reflective black material is provided at a cover portion 103 of the pantograph 100 and a light-reflective white material is provided as upper markers 2L, 2C and 2R and a lower marker 3. Light is irradiated toward the upper markers 2L, 2C and 2R and the lower maker 3.

Images of the upper central marker 2C and the lower marker 3 are recorded by the central line sensor 11C. Images of the upper left side marker 2L is recorded by the left side line sensor 11L. Imaged of the upper right side marker 2R is recorded by the right side line sensor 11R. Images recorded by the line sensors 11L, 11C and 11R are stored in a computer 13 set inside the train body 10.

A position of the upper central marker 2C and a position of the lower marker 3 at the central portion of the pantograph 100 are detected by processing the images recorded by the central line sensor 11c. Then, the relative displacement is computed in accordance with the position of the upper central portion 2C and the position of the lower marker 3. By detecting a difference between the relative displacement and the natural length of the virtual combined spring 1, an elasticity of the virtual combined spring 1 is calculated. A spring reaction force is detected by multiplying the elasticity of the virtual combined spring 1 with the combined virtual spring constant.

The images recorded by the line sensors 11L, 11C and 11R are processed by the computer 13 so that the positions of the upper markers 2L, 2C and 2R of the pantograph 100 are detected. The displacement of the upper markers 2L, 2C and 2R are differentiated twice so that an acceleration of the pantograph 10 can be obtained. An inertial force of the pantograph 100 is detected by multiplying the obtained acceleration and the equivalent mass of the pantograph 100.

Further, in an actual case, lifting force applied on the ship-shaped body 101 is influenced to the result of the contact force measurement. Thus, the lifting force is detected by the following equation (1).

$$F_{earo} = (\tfrac{1}{2})C_L \rho V^2 S \qquad (1)$$

In the above equation (1), $C_L$ is a lift force coefficient of a ship-shaped body, p is air density, V is running velocity and S is a surface area. The running velocity V is calculated in accordance with the image data and an actual synthesized running data of the actual train body 10. The other parameters can be experimentally detected. Finally, by adding the spring reaction force, the inert force and the lifting force detected by the above method, a contact force of the pantograph 100 can be detected.

In the next, it will be described steps in the contact force measurement method according to the present embodiment.

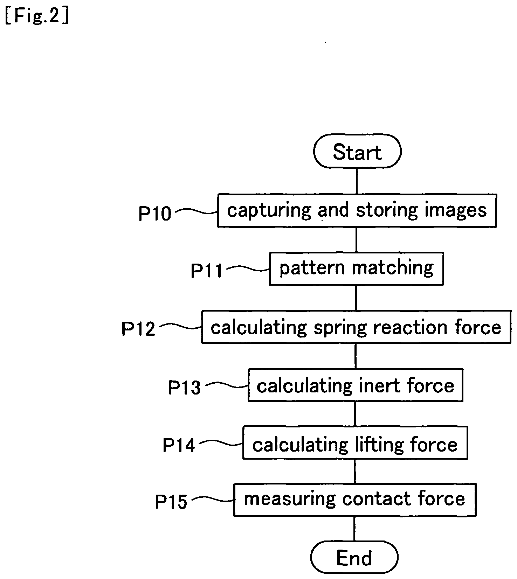

Fig. 2 is a flow chart for showing steps of a contact force measurement method according to the first embodiment of the present invention.

As shown in Fig. 2, at first, in a step P10, images recorded by the line sensors 11L, 11C and 11C are stored in the computer 13 set inside the train body 10.

In the next, in a step P11, the positions of the upper markers 2L, 2C and 2R and the lower marker 3 are detected by comparing a pattern matching previously obtained in the computer in which a template of the upper markers 2L, 2C and 2R and the lower marker 3 is memorized.

In a step P12, the relative displacement of the central portion of the pantograph 100 is computed by the computer 13. By detecting a difference between the relative displacement and a natural length of the virtual combined spring 1, the elasticity of the virtual combined spring 1 is computed. Thus, a spring reaction force is detected by multiplying the elasticity with a spring constant of the virtual combined spring 1.

In a step P13, the secondary order differential is computed with respect to the displacement of the upper markers 2L, 2C and 2R by the computer 13 so as to obtain an acceleration of the pantograph 100. The inert force is detected by multiplying the acceleration with the surface area of the pantograph 100.

In a step P14, a lifting force is detected in accordance with the images and the synthesized actual running velocity of the train body 10 in the computer 13.

Finally, in a step P15, a contact force of the pantograph 100 is obtained by adding the spring reaction detected in the step P12, the inert force detected in the step P13 and the lifting force detected in the step 14 in the computer 13.

These steps described above are the contact force measurement method according to the present embodiment.

As described above, in the contact force measurement method and the contact force measurement device according to the present embodiment, even if a ship-shaped body 101 and a spring portion 102 arranged at a pantograph 100 cannot be directly photographed, a contact force of the pantograph can be measured accurately.

According to the contact force measurement method and the contact force measurement device of the present embodiment, a contact force can be detected by processing the images recorded by the line sensors 11L, 11C and 11R without contacting the pantograph 100. Upon comparing the method of the present embodiment and the method disclosed in the Patent Documents 2 and 3, it is unnecessary to operate some specific steps such as a step for arranging cable wires and holes so as to set sensors and LED devices on the pantograph 100 in the present embodiment.

According to the contact force measurement method and the contact force measurement device according to the present embodiment, a contact force of the pantograph can be accurately measured with a high space analysis capability and a high synthesized capability by utilizing the line sensors 11L, 11C and 11R.

Embodiment 2

A contact force measurement method and the contact force measurement device of the second embodiment according to the present invention will be described hereinafter.

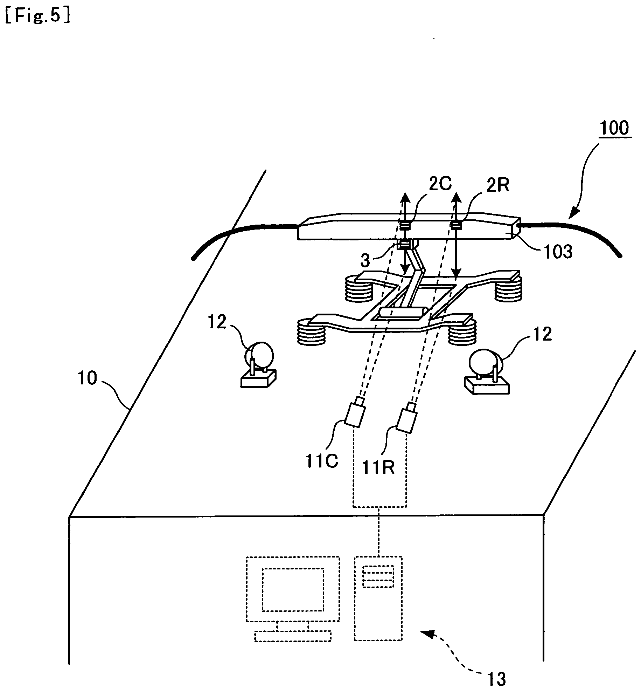

Fig. 5 shows a sketch of a construction of a contact force measurement device according to the second embodiment of the present invention.

As shown in Fig. 5, the contact force measurement device according to the second embodiment is almost similar to that according to the first embodiment except a matter as described as follows. In the second embodiment, a left upper marker 2L of the both left and right markers 2L and 2R is virtually arranged at a position linearly predicted based on a position of the right upper marker 2R and a position of the center upper marker 2C so that a contact force of a pantograph 100 can be detected without providing a left line sensor 11L.

That is, in the contact force measurement device according to the second embodiment, one of the left and right line sensors 11L and 11R out of three line sensors 11L, 11C and 11R as shown in Fig. 1 may be omitted. In the present embodiment, it will be described the case in which the left line sensor 11L is omitted.

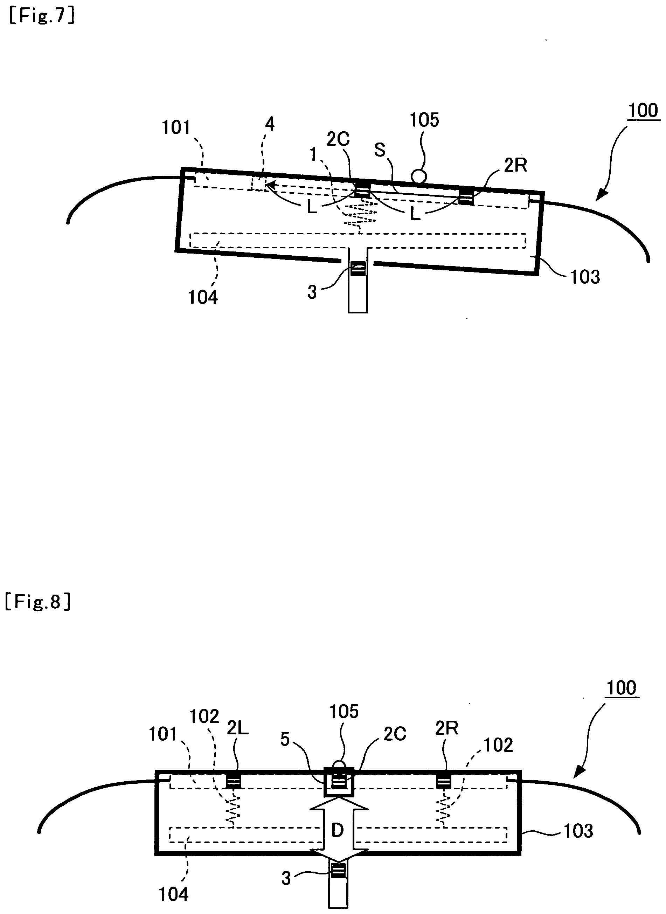

In the present embodiment as shown in Fig. 7, on a line S aligning from the right upper marker 2R to the central upper marker 2C, a point extended from the central upper marker 2C with a distance L is recognized as a virtual marker point 4 on which another maker is deemed virtually located. Thereby, even if the left line sensor 11L is omitted, the displacement of the pantograph 100 at the three points can be detected by utilizing the virtual marker point 4.

The steps of the contact force measurement method according to the present embodiment will be described.

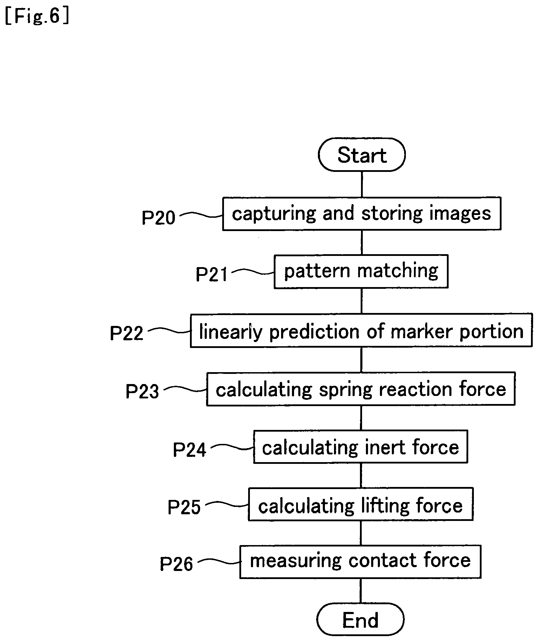

Fig. 6 is a flow chart for showing the steps of the contact force measurement method according to the second embodiment of the present invention.

As shown in Fig. 6, at the first, in a step P20, images recorded by the line sensors 11C and 11R are stored in a computer 13 set inside the train body 10.

In a step P21, the positions of the upper markers 2C and 2R and the lower marker 3 are detected by comparing a pattern matching previously obtained in the computer 13 in which a template of the upper markers 2C and 2R and the lower marker 3 is memorized.

In a step P22, after the pattern matching by the computer 13, a virtual marker point 4 is detected by a linear prediction. This step is different from the steps in the contact force measurement method according to the first embodiment.

In a step 23, the relative displacement of the central portion of the pantograph 100 is computed by the computer 13. By detecting a difference between the relative displacement and a natural length of the virtual combined spring 1, the elasticity of the virtual combined spring 1 is computed. Thus, a spring reaction force is detected by multiplying the elasticity with a spring constant of the virtual combined spring 1.

In a step P24, the secondary order differential is computed with respect to the displacement of the upper markers 2C and 2R by the computer 13 so as to calculate an acceleration of the pantograph 100. The inert force is detected by multiplying the acceleration with the surface area of the pantograph 100.

In a step P125, a lifting force is detected in accordance with the images and the synthesized actual running velocity of the train body 10 in the computer 13. Finally, in a step P26, a contact force of the pantograph 100 is obtained by adding the spring reaction detected in the step P23, the inert force detected in the step P24 and the lifting force detected in the step 25 in the computer 13.

The steps described above are the contact force measurement method according to the second embodiment.

As described above, in the contact force measurement method and the contact force measurement device according to the second embodiment, in addition to the effects obtained by the contact force measurement method and the contact force measurement device according to the first embodiment, a contact force of the pantograph 100 can be detected by recognizing the virtual marker point 4 in accordance with the positions of the right upper marker 2R and the central upper marker 2C. Thus, the left line sensor 11L provided at the contact force measurement device according to the first embodiment can be omitted.

In according to the contact force measurement method and the contact force measurement device according to the second embodiment, the left upper marker 2L provided at the contact force measurement device according to the first embodiment can be omitted so that the patter matching for detecting a position of the left upper marker 2L in the recorded image is unnecessary. Thus, a number of the pattern matching can be reduced. Upon comparing the second embodiment and the first embodiment, the steps can be processed more quickly in the second embodiment.

Embodiment 3

A contact force measurement method and a contact force measurement device of the third embodiment according to the present invention will be described. Fig. 9 is a sketch for showing an example how a ship-shaped body is bent by elastic vibration in a contact force measurement device according to the third embodiment. A shown in Fig. 9, in a vibration frequency range within that an influence of elastic vibration of a ship-shaped body 101 cannot be ignored, the ship-shaped body 101 is bent so that a displacement of the ship-shaped body 101 cannot be measured correctly in a view point from a central upper marker 2C of a cover 103. Thus, it is necessary to recognize an average point 5 of a left upper marker 2L and a right upper marker 2R as a point described above a combined spring 1.

Although a structure of the contact force measurement device according to the third embodiment is as similar as that according to the first embodiment, in the third embodiment, a relative displacement is calculated by the average point 5 of the lift upper marker 2L and the right upper marker 2R and the position of the lower marker 3. Although the central upper marker 2C is provided in the present embodiment, the central upper marker 2C may be omitted.

Fig. 8 shows a sketch of an example of a relative displacement by a contact force measurement device according to the third embodiment of the present invention.

In the present embodiment as shown in Fig. 8, a relative displacement is recognized as a distance between an upper position of a combined spring 1 detected by the average point 5 of the left upper marker 2L and the right upper marker 2R and the lower position of the combined spring 1 detected by the lower marker 3. Herein, the relative displacement is a gap between the average point 5 of the left upper marker 2L and the right upper marker 2R and the lower marker 3 as shown an arrow D in Fig. 8 and Fig. 9.

In the next, it will be described process steps in the contact force measurement method according to the present embodiment.

The process of the contact force measurement method according to the present embodiment is almost equal to the process of the contact force measurement method according to the first embodiment except the steps P11 to P13 as described as follows.

In the third embodiment, in a step P11 as shown in Fig. 2, the positions of the upper left and right markers 2L and 2R and the lower marker 3 are detected in the stored images of the pantograph by comparing a pattern matching previously obtained in the computer 13 in which a template of the upper markers 2L and 2R and the lower marker 3 is memorized.

In a step P12, the relative displacement of the central portion of the pantograph 100 is computed based on the average point 5 of left upper marker 2L and the right upper marker 5 and a position of the lower marker 3 by the computer 13. By detecting a difference between the relative displacement and a natural length of the virtual combined spring 1, the elasticity of the virtual combined spring 1 is computed. Thus, a spring reaction force is detected by multiplying the elasticity with a spring constant of the virtual combined spring 1.

In a step P13, the secondary order differential is computed with respect to the displacement of the upper markers 2L and 2R and a displacement of the average point 5 of the left upper marker 2L and the right upper marker 2R by the computer 13 so as to calculate an acceleration of the pantograph 100. The inert force is detected by multiplying the calculated acceleration and the equivalence mass of the pantograph 100.

In the embodiment as described above, although the central upper marker 2C is provided, the central upper marker 2C may be omitted. Further, in the case of one vibration frequency range wherein an elastic vibration of the ship-shaped body 101 can be ignored, that is, in the case that the ship-shaped body 101 is not bent, the contact force measurement method according to the first embodiment may be operated. In the case of another vibration frequency range wherein an elastic vibration of the ship-shaped body 101 cannot be ignored, that is, in the case that the ship-shaped body 101 is bent, the contact force measurement method according to the present embodiment may be operated.

As described above, in accordance with the contact force measurement method and the contact force measurement device according to the present embodiment, even if the ship-shaped body 101 and the spring 102 of a pantograph 100 cannot be directly photographed and the ship-shaped body 101 is bend in the vibration frequency range wherein the elastic vibration of the ship-shaped body 101 cannot be ignored, a contact force of the pantograph 100 can be accurately measured.

**Industrial Use of the Invention**

The present invention is applicable to a contact force measurement method for measuring a contact force of a pantograph by processing picture image and its contact force measurement device, particularly to a contact force measurement method for measuring a contact force of a pantograph of which a ship-shaped body and a spring cannot be directly photographed without utilizing a spring elasticity.

**Description of the Numeral in the Drawing**

| 1 | combined spring |
|---|---|
| 2L | left upper marker |
| 2C | center upper marker |
| 2R | right upper marker |
| 3 | lower marker |
| 4 | virtual marker point |
| 5 | average point |
| 10 | train body |
| 11L | left line sensor |
| 11C | central line sensor |
| 11R | right line sensor |
| 12 | lighting device |
| 13 | computer |
| 100 | pantograph |
| 101 | ship-shaped body of collector head |
| 102 | spring |
| 103 | cover |
| 104 | collector head support member |

**Claims**

1. A contact force measurement method for measuring a contact force of a pantograph (100) wherein a pantograph head (101) is supported by a pantograph head support member (104) through a plurality of springs (102), the contact force measurement method comprising:

    a step (P10, P20) for recording images of said pantograph;
    a step (12, P23) for assuming a combined spring (1) to be located at a widthwise central portion of said pantograph for the combination of said plurality of springs, calculating a relative displacement between a position corresponding to said pantograph head at said widthwise central portion of said pantograph and said pantograph head support member, and computing elasticity of said combined spring by detecting a difference between said relative displacement and a natural length of said combined spring, in order to detect a spring reaction force by multiplying said elasticity with a spring constant of said combined spring;
    a step (P13, P24) for computing the second order differential of a displacement at said position corresponding to said pantograph head, in order to calculate acceleration of said pantograph in accordance with said images, and calculating an inert force by multiplying said acceleration with an equivalent mass of said pantograph;
    a step (P14, P25) for detecting a lifting force based on said images and speed data of an actual running train which are time synchronized; and
    a step (P15, P26) for measuring a contact force by adding said spring reaction force, said inert force and said lifting force.

2. A contact force measurement method as claimed in claim 1 comprising:

    a step (P11) for detecting positions of markers (2, 3), wherein one marker (2C) is arranged at said central portion of said pantograph (100) along the width direction corresponding to said pantograph head, two other markers (2L, 2R) are arranged at both sides of said pantograph, each at one side of the pantograph (100) along the width direction corresponding to said pantograph head, and another one marker (3) is arranged at said pantograph head support member (104),

said step (P11) for detecting positions of markers including a step for detecting positions of said three markers (2L, 2C, 2R) arranged at the pantograph corresponding to said pantograph head and a position of said marker (3) arranged at said pantograph head support member by processing said images.

3. A contact force measurement method as claimed in claim 1 comprising:

a step (P11) for detecting positions of markers (2, 3), wherein two markers (2L, 2R) are arranged at both sides of said pantograph (100) along the width direction corresponding to the pantograph head, each at one side of the pantograph, and one other marker (3) is arranged at said pantograph head support member (104),

said step for detecting positions of markers including a step (P11) for detecting positions of said two markers arranged at both sides of said pantograph corresponding to said pantograph head and a position of said other marker arranged at said pantograph head support member by processing said images.

4. A contact force measurement method as claimed in claim 1 comprising:

a step (P21, P22) for detecting positions of markers (2, 3), wherein one marker (2C) is arranged at said central portion of said pantograph (100) along the width direction corresponding to said pantograph head, another marker (2L; 2R) is arranged at one of both sides of said pantograph along the width direction corresponding to said pantograph head, and the other marker (3) is arranged at said pantograph head support member (104),

said step for detecting positions of markers including a step (P21, P22) for detecting positions of two markers arranged at said pantograph corresponding to said pantograph head and a position of said marker arranged at said pantograph head support member, wherein a virtual marker is deemed to be positioned at a point linearly predicted in accordance with a position of said marker arranged at said central portion of said pantograph corresponding to said pantograph head and said marker arranged at one of said both sides of said pantograph along the width direction corresponding to said pantograph head.

5. A contact force measurement device for measuring a contact force of a pantograph (100) wherein a pantograph head (101) is supported by a pantograph head support member (104) through a plurality of springs (102), the contact force measurement device comprising:

record means (11) for recording images of said pantograph and

measurement means (13) for measuring a contact force of said pantograph, wherein a combined spring (1) is assumed to be positioned at a widthwise central portion of said pantograph for the combination of the plurality of said springs, a relative displacement is calculated (P11, P21) in accordance with said widthwise central portion of said pantograph corresponding to said pantograph head and said pantograph head support member by processing said images, a difference between said relative displacement and a natural length of said combined spring is detected so as to calculate elasticity of said combined spring, a spring reaction force is detected (P12, P23) by multiplying said elasticity with a spring constant of said combined spring, an acceleration of the pantograph is detected by differentiating a displacement of said pantograph head by processing said images, an inert force is detected (P13, P24) by multiplying said acceleration with an equivalent mass of said pantograph, a lifting force applied to said pantograph is detected (P14, P25) by processing said images and synchronized data of an actual running speed of a train, and said measurement means is adapted to detect (P15, P26) a contact force by adding said spring reaction force, said inert force and said lifting force.

6. A contact force measurement device as claimed in claim 5 wherein one marker (2C) is arranged at said central portion of said pantograph (100) along the width direction corresponding to said pantograph head, two other markers (2L, 2R) are arranged at the both sides of said pantograph, each at one side of the pantograph (100) along the width direction corresponding to said pantograph head, and another one marker (3) is arranged at said pantograph head support member (104),

said measurement means is adapted to detect positions of said three markers (2L, 2C, 2R) arranged at said pantograph corresponding to said pantograph head and a position of said marker (3) arranged at said pantograph head support member by processing said images.

7. A contact force measurement device as claimed in claim 5 wherein two markers (2L, 2R) are arranged at both sides of said pantograph (100) along the width direction corresponding to the pantograph head, each at one side of the pantograph, and one other marker (3) is arranged at said pantograph head support member (104),

said measurement means is adapted to detect positions of said two markers arranged at both sides of said pantograph corresponding to said pantograph head and a position of said other marker arranged at said pantograph head support member by processing said images.

8. A contact force measurement device as claimed in claim 5 wherein one marker (2C) is arranged at said central portion of said pantograph (100) along the width direction corresponding to said pantograph head, another marker (2L; 2R) is arranged at one of both sides of said pantograph along the width direction corresponding to said pantograph head, and the other marker (3) is arranged at said pantograph head support member (104),

said measurement means is adapted to detect positions of two markers arranged at said pantograph corresponding to said pantograph head and a position of said marker arranged at said pantograph head support member, wherein a virtual marker is deemed to be positioned at a point linearly predicted in accordance with a position of said marker arranged at said central portion of said pantograph corresponding to said pantograph head and said marker arranged at one of said both sides of said pantograph along the width direction corresponding to said pantograph head.

**Patentansprüche**

1. Kontaktkraft-Messverfahren zum Messen einer Kontaktkraft eines Stromabnehmers (100), wobei ein Stromabnehmerkopf (101) über mehrere Federn (102) von einem Stromabnehmerkopf-Tragelement (104) getragen wird und das Kontaktkraft-Messverfahren Folgendes umfasst:

einen Schritt (P10, P20) zum Aufzeichnen von Bildern des Stromabnehmers;
einen Schritt (P12, P23) zur Annahme, dass an einem in Breitenrichtung mittleren Abschnitt des Stromabnehmers für die Kombination der mehreren Federn eine vereinigte Feder (1) angeordnet ist, zum Berechnen eines relativen Versatzes zwischen einem dem Stromabnehmerkopf entsprechenden Ort an dem in Breitenrichtung mittleren Abschnitt des Stromabnehmers und dem Stromabnehmerkopf-Tragelement sowie zum Berechnen einer Nachgiebigkeit der vereinigten Feder durch Erfassen der Differenz zwischen dem relativen Versatz und einer natürlichen Länge der vereinigten Feder, um durch Multiplizieren der Nachgiebigkeit mit der Federkonstanten der vereinigten Feder eine Federantwortkraft zu erfassen;
einen Schritt (P13, P24) zum Berechnen des Differentials zweiter Ordnung eines Versatzes an dem dem Stromabnehmerkopf entsprechenden Ort, um entsprechend den Bildern eine Beschleunigung des Stromabnehmers zu berechnen, sowie zum Berechnen einer Trägheitskraft durch Multiplizieren der Beschleunigung mit einer äquivalenten Masse des Stromabnehmers;
einen Schritt (P14, P25) zum Erfassen einer Hubkraft aufgrund der Bilder und aufgrund von Geschwindigkeitsdaten eines tatsächlich fahrenden Zugs, die zeitlich synchronisiert sind; und
einen Schritt (P15, P26) zum Messen einer Kontaktkraft durch Addieren der Federantwortkraft, der Trägheitskraft und der Hubkraft.

2. Kontaktkraft-Messverfahren nach Anspruch 1, umfassend:

einen Schritt (P11) zum Erfassen von Orten von Markierungen (2, 3), wobei eine Markierung (2C) am mittleren Abschnitt des Stromabnehmers (100) entlang der Breitenrichtung entsprechend dem Stromabnehmerkopf, zwei andere Markierungen (2L, 2R) an beiden Seiten des Stromabnehmers jeweils auf einer Seite des Stromabnehmers (100) entlang der Breitenrichtung entsprechend dem Stromabnehmerkopf und eine weitere Markierung (3) am Stromabnehmerkopf-Tragelement (104) angeordnet sind,
wobei der Schritt (P11) zum Erfassen von Orten von Markierungen einen Schritt zum Erfassen von Orten der drei Markierungen (2L, 2C, 2R), die am Stromabnehmer entsprechend dem Stromabnehmerkopf angeordnet sind, und eines Orts der Markierung (3), die am Stromabnehmerkopf-Tragelement angeordnet ist, durch Verarbeitung der genannten Bilder beinhaltet.

3. Kontaktkraft-Messverfahren nach Anspruch 1, umfassend:

einen Schritt (P11) zum Erfassen von Orten von Markierungen (2, 3), wobei zwei Markierungen (2L, 2R) auf beiden Seiten des Stromabnehmers (100) entlang der Breitenrichtung entsprechend dem Stromabnehmerkopf jeweils auf einer Seite des Stromabnehmers und eine weitere Markierung (3) am Stromabnehmerkopf-Tragelement (104) angeordnet sind,
wobei der Schritt zum Erfassen von Orten von Markierungen einen Schritt (P11) zum Erfassen von Orten der beiden Markierungen, die auf beiden Seiten des Stromabnehmers entsprechend dem Stromabnehmerkopf angeordnet sind, und eines Orts der weiteren Markierung, die am Stromabnehmerkopf-Tragelement angeordnet ist, durch Verarbeitung der genannten Bilder enthält.

4.  Kontaktkraft-Messverfahren nach Anspruch 1, umfassend:

    einen Schritt (P21, P22) zum Erfassen von Orten von Markierungen (2, 3), wobei eine Markierung (2C) am mittleren Abschnitt des Stromabnehmers (100) entlang der Breitenrichtung entsprechend dem Stromabnehmerkopf, eine andere Markierung (2L, 2R) an einer von beiden Seiten des Stromabnehmers entlang der Breitenrichtung entsprechend dem Stromabnehmerkopf und eine weitere Markierung (3) am Stromabnehmerkopf-Tragelement (104) angeordnet sind,

    wobei der Schritt zum Erfassen von Orten von Markierungen einen Schritt (P21, P22) zum Erfassen von Orten zweier Markierungen, die am Stromabnehmer entsprechend dem Stromabnehmerkopf angeordnet sind, und eines Orts der Markierung, die am Stromabnehmerkopf-Tragelement angeordnet ist, enthält, wobei an einem Punkt, der entsprechend dem Ort der Markierung, die am mittleren Abschnitt des Stromabnehmers entsprechend dem Stromabnehmerkopf angeordnet ist, und der Markierung, die auf einer von beiden Seiten des Stromabnehmers entlang der Breitenrichtung entsprechend dem Stromabnehmerkopf angeordnet ist, linear projiziert wird, eine virtuelle Markierung angeordnet gedacht wird.

5.  Kontaktkraft-Messvorrichtung, zum Messen einer Kontaktkraft eines Stromabnehmers (100), wobei ein Stromabnehmerkopf (101) über mehrere Federn (102) von einem Stromabnehmerkopf-Tragelement (104) getragen wird und die Kontaktkraft-Messvorrichtung Folgendes umfasst:

    eine Aufzeichnungseinrichtung (11) zum Aufzeichnen von Bildern des Stromabnehmers, und eine Messeinrichtung (13) zum Messen einer Kontaktkraft des Stromabnehmers, wobei an einem in Breitenrichtung mittleren Abschnitt des Stromabnehmers für die Kombination der mehreren Federn eine vereinigte Feder (1) angeordnet angenommen wird, wobei gemäß dem in Breitenrichtung mittleren Abschnitt des Stromabnehmers entsprechend dem Stromabnehmerkopf sowie gemäß dem Stromabnehmerkopf-Tragelement ein relativer Versatz berechnet wird (P11, P21), indem die genannten Bilder verarbeitet werden, eine Differenz zwischen dem relativen Versatz und einer natürlichen Länge der vereinigten Feder erfasst wird, um die Nachgiebigkeit der vereinigten Feder zu berechnen, eine Federantwortkraft erfasst wird (P12, P23), indem die Nachgiebigkeit mit der Federkonstanten der vereinigten Feder multipliziert wird, eine Beschleunigung des Stromabnehmers erfasst wird, indem mittels einer Verarbeitung der Bilder ein Versatz des Stromabnehmerkopfs differenziert wird, eine Trägheitskraft erfasst wird (P13, P24), indem die Beschleunigung mit einer äquivalenten Masse des Stromabnehmers multipliziert wird, eine am Stromabnehmer anliegende Hubkraft erfasst wird (P14, P25), indem die Bilder und synchronisierte Daten einer tatsächlichen Laufgeschwindigkeit eines Zugs verarbeitet werden, und die Messeinrichtung eingerichtet ist, durch Addieren der Federantwortkraft, der Trägheitskraft und der Hubkraft eine Kontaktkraft zu erfassen (P15, P26).

6.  Kontaktkraft-Messvorrichtung nach Anspruch 5, wobei am mittleren Abschnitt des Stromabnehmers (100) entlang der Breitenrichtung entsprechend dem Stromabnehmerkopf eine Markierung (2C) angeordnet ist, zwei andere Markierungen (2L, 2R) an beiden Seiten des Stromabnehmers jeweils auf einer Seite des Stromabnehmers (100) entlang der Breitenrichtung entsprechend dem Stromabnehmerkopf angeordnet sind und eine weitere Markierung (3) am Stromabnehmerkopf-Tragelement (104) angeordnet ist,

    wobei die Messeinrichtung eingerichtet ist, Orte der drei Markierungen (2L, 2C, 2R), die am Stromabnehmer entsprechend dem Stromabnehmerkopf angeordnet sind, und einen Ort der Markierung (3), die am Stromabnehmerkopf-Tragelement angeordnet ist, durch Verarbeiten der genannten Bilder zu erfassen.

7.  Kontaktkraft-Messvorrichtung nach Anspruch 5, wobei zwei Markierungen (2L, 2R) auf beiden Seiten des Stromabnehmers (100) entlang der Breitenrichtung entsprechend dem Stromabnehmerkopf jeweils auf einer Seite des Stromabnehmers, und eine weitere Markierung (3) am Stromabnehmerkopf-Tragelement (107) angeordnet sind,

    wobei die Messeinrichtung eingerichtet ist, Orte der beiden Markierungen, die auf beiden Seiten des Stromabnehmers entsprechend dem Stromabnehmerkopf angeordnet sind, und einen Ort der weiteren Markierung, die am Stromabnehmerkopf-Tragelement angeordnet ist, durch Verarbeiten der genannten Bilder zu erfassen.

8.  Kontaktkraft-Messvorrichtung nach Anspruch 5, wobei eine Markierung (2C) am mittleren Abschnitt des Stromabnehmers (100) entlang der Breitenrichtung entsprechend dem Stromabnehmerkopf angeordnet ist, eine andere Markierung (2L; 2R) auf einer von beiden Seiten des Stromabnehmers entlang der Breitenrichtung entsprechend dem Stromabnehmerkopf angeordnet ist und eine weitere Markierung (3) am Stromabnehmerkopf-Tragelement (104) angeordnet ist,

wobei die Messeinrichtung eingerichtet ist, Orte von zwei Markierungen, die am Stromabnehmer entsprechend dem Stromabnehmerkopf angeordnet sind, und einen Ort der Markierung, die am Stromabnehmerkopf-Tragelement angeordnet ist, zu erfassen, wobei an einem Punkt, der entsprechend eines Orts der Markierung, die am mittleren Abschnitt des Stromabnehmers entsprechend dem Stromabnehmerkopf angeordnet ist und der Markierung, die auf einer von beiden Seiten des Stromabnehmers entlang der Breitenrichtung entsprechend dem Stromabnehmerkopf angeordnet ist, linear projiziert ist, eine virtuelle Markierung angeordnet angenommen wird.

## Revendications

1. Procédé de mesure de force de contact pour mesurer une force de contact d'un pantographe (100) dans lequel une tête de pantographe (101) est supportée par un élément de support de tête de pantographe (104) par l'intermédiaire d'une pluralité de ressorts (102), le procédé de mesure de force de contact comprenant :

   un étape (P10, P20) pour enregistrer des images dudit pantographe ;
   une étape (P12, P23) pour supposer qu'un ressort combiné (1) est situé dans une partie centrale dans le sens de la largeur dudit pantographe pour la combinaison de ladite pluralité de ressorts, calculer un déplacement relatif entre une position correspondant à ladite tête de pantographe dans ladite partie centrale dans le sens de la largeur dudit pantographe et ledit élément de support de tête de pantographe, et calculer l'élasticité dudit ressort combiné par la détection d'une différence entre ledit déplacement relatif et une longueur naturelle dudit ressort combiné, de façon à détecter une force de réaction de ressort par multiplication de ladite élasticité par une constante d'élasticité dudit ressort combiné ;
   une étape (P13, P24) pour calculer le différentiel de deuxième ordre d'un déplacement dans ladite position correspondant à ladite tête de pantographe, de façon à calculer l'accélération dudit pantographe en fonction desdites images, et calculer une force d'inertie par multiplication de ladite accélération par une masse équivalente dudit pantographe ;
une étape (P14, P25) pour détecter une force de soulèvement en fonction desdites images et de données de vitesse d'un train en déplacement effectif qui sont synchronisées dans le temps ; et
une étape (P15, P26) pour mesurer une force de contact par addition de ladite force de réaction de ressort, de ladite force d'inertie et de ladite force de soulèvement.

2. Procédé de mesure de force de contact selon la revendication 1, comprenant :

   une étape (P11) pour détecter des positions de marqueurs (2, 3), un marqueur (2C) étant disposé dans ladite partie centrale dudit pantographe (100) le long de la direction de la largeur correspondant à ladite tête de pantographe, deux autres marqueurs (2G, 2D) étant disposés des deux côtés dudit pantographe, chacun d'un côté du pantographe (100) le long de la direction de la largeur correspondant à ladite tête de pantographe, et un autre marqueur (3) étant disposé au niveau dudit élément de support de tête de pantographe (104),
   ladite étape (P11) pour détecter des positions de marqueurs comprenant une étape pour détecter des positions desdits trois marqueurs (2G, 2C, 2D) disposés sur ledit pantographe correspondant à ladite tête de pantographe et une position dudit marqueur (3) disposé sur ledit élément de support de tête de pantographe par traitement desdites images.

3. Procédé de mesure de force de contact selon la revendication 1, comprenant :

   une étape (P11) pour détecter des positions de marqueurs (2, 3), deux marqueurs (2G, 2D) étant disposés des deux côtés dudit pantographe (100) le long de la direction de la largeur correspondant à la tête de pantographe, chacun d'un côté du pantographe, et un autre marqueur (3) étant disposé sur ledit élément de support de tête de pantographe (104),
   ladite étape pour détecter des positions de marqueurs comprenant une étape (P11) pour détecter des positions desdits deux marqueurs disposés des deux côtés dudit pantographe correspondant à ladite tête de pantographe et une position dudit autre marqueur disposé sur ledit élément de support de tête de pantographe par traitement desdites images.

4. Procédé de mesure de force de contact selon la revendication 1, comprenant :

une étape (P21, P22) pour détecter des positions de marqueurs (2, 3), un marqueur (2C) étant disposé dans ladite partie centrale dudit pantographe (100) le long de la direction de la largeur correspondant à ladite tête de pantographe, un autre marqueur (2G ; 2D) étant disposé à l'un des deux côtés dudit pantographe le long de la direction de la largeur correspondant à ladite tête de pantographe, et l'autre marqueur (3) étant disposé au niveau dudit élément de support de tête de pantographe (104),

ladite étape pour détecter des positions de marqueurs comprenant une étape (P21, P22) pour détecter des positions de deux marqueurs disposés sur ledit pantographe correspondant à ladite tête de pantographe et une position dudit marqueur disposé sur ledit élément de support de tête de pantographe, dans laquelle un marqueur virtuel est estimé comme étant positionné en un point prévu de façon linéaire en fonction d'une position dudit marqueur disposé dans ladite partie centrale dudit pantographe correspondant à ladite tête de pantographe et dudit marqueur disposé sur l'un desdits deux côtés dudit pantographe le long de la direction de la largeur correspondant à ladite tête de pantographe.

**5.** Dispositif de mesure de force de contact pour mesurer une force de contact d'un pantographe (100) dans lequel une tête de pantographe (101) est supportée par un élément de support de tête de pantographe (104) par l'intermédiaire d'une pluralité de ressorts (102), le dispositif de mesure de force de contact comprenant :

des moyens d'enregistrement (11) pour enregistrer des images dudit pantographe, et

des moyens de mesure (13) pour mesurer une force de contact dudit pantographe, un ressort combiné (1) étant supposé être positionné dans une partie centrale dans le sens de la largeur dudit pantographe pour la combinaison de ladite pluralité desdits ressorts, un déplacement relatif étant calculé (P11, P21) en fonction de ladite partie centrale dans le sens de la largeur dudit pantographe correspondant à ladite tête de pantographe et dudit élément de support de tête de pantographe par traitement desdites images, une différence entre ledit déplacement relatif et une longueur naturelle dudit ressort combiné étant détectée de façon à calculer l'élasticité dudit ressort combiné, une force de réaction de ressort étant détectée (P12, P23) par multiplication de ladite élasticité par une constante d'élasticité dudit ressort combiné, une accélération du pantographe étant détectée par différenciation d'un déplacement de ladite tête de pantographe par traitement desdites images, une force d'inertie étant détectée (P13, P24) par multiplication de ladite accélération par une masse équivalente dudit pantographe, une force de soulèvement appliquée audit pantographe étant détectée (P14, P25) par traitement desdites images et de données synchronisées d'une vitesse de déplacement effective d'un train, et lesdits moyens de mesure étant adaptés de façon à détecter (P15, P26) une force de contact par addition de ladite force de réaction de ressort, de ladite force d'inertie et de ladite force de soulèvement.

**6.** Dispositif de mesure de force de contact selon la revendication 5, dans lequel un marqueur (2C) est disposé dans ladite partie centrale dudit pantographe (100) le long de la direction de la largeur correspondant à ladite tête de pantographe, deux autres marqueurs (2G, 2D) sont disposés des deux côtés dudit pantographe, chacun d'un côté du pantographe (100) le long de la direction de la largeur correspondant à ladite tête de pantographe, et un autre marqueur (3) est disposé au niveau dudit élément de support de tête de pantographe (104),

lesdits moyens de mesure étant adaptés de façon à détecter des positions desdits trois marqueurs (2G, 2C, 2D) disposés sur ledit pantographe correspondant à ladite tête de pantographe et une position dudit marqueur (3) disposé au niveau dudit élément de support de tête de pantographe par traitement desdites images.

**7.** Dispositif de mesure de force de contact selon la revendication 5, dans lequel deux marqueurs (2G, 2D) sont disposés des deux côtés dudit pantographe (100) le long de la direction de la largeur correspondant à la tête de pantographe, chacun d'un côté du pantographe, et un autre marqueur (3) est disposé au niveau dudit élément de support de tête de pantographe (104),

lesdits moyens de mesure étant adaptés de façon à détecter des positions desdits deux marqueurs disposés des deux côtés dudit pantographe correspondant à ladite tête de pantographe et une position dudit autre marqueur disposé au niveau dudit élément de support de tête de pantographe par traitement desdites images.

**8.** Dispositif de mesure de force de contact selon la revendication 5, dans lequel un marqueur (2C) est disposé dans ladite partie centrale dudit pantographe (100) le long de la direction de la largeur correspondant à ladite tête de pantographe, un autre marqueur (2G ; 2D) est disposé à l'un des deux côtés dudit pantographe le long de la direction de la largeur correspondant à ladite tête de pantographe, et l'autre marqueur (3) est disposé sur ledit élément de support de tête de pantographe (104),

lesdits moyens de mesure étant adaptés de façon à détecter des positions de deux marqueurs disposés sur ledit pantographe correspondant à ladite tête de pantographe et une position dudit marqueur disposé au niveau dudit élément de support de tête de pantographe, un marqueur virtuel étant estimé comme étant positionné en un point prévu de façon linéaire en fonction d'une position dudit marqueur disposé dans ladite partie centrale dudit pantographe correspondant à ladite tête de pantographe et dudit marqueur disposé à l'un desdits deux côtés dudit pantographe le long de la direction de la largeur correspondant à ladite tête de pantographe.

[Fig.1]

[Fig.2]

```
                              ┌─────────┐
                             ( Start    )
                              └─────────┘
                                   │
        P10 ──┤ capturing and storing images │
                                   │
        P11 ──┤ pattern matching │
                                   │
        P12 ──┤ calculating spring reaction force │
                                   │
        P13 ──┤ calculating inert force │
                                   │
        P14 ──┤ calculating lifting force │
                                   │
        P15 ──┤ measuring contact force │
                                   │
                              ┌─────────┐
                             ( End      )
                              └─────────┘
```

[Fig.3]

100

105

101

1

103

104

[Fig.4]

100

105

101    2L    2C    2R

D

103

104    3

[Fig.5]

[Fig.6]

```
                              ╭──────────╮
                              │  Start   │
                              ╰────┬─────╯
                                   │
P20 ──┤ capturing and storing images │
                                   │
   P21 ──┤ pattern matching │
                                   │
P22 ──┤ linearly prediction of marker portion │
                                   │
   P23 ──┤ calculating spring reaction force │
                                   │
      P24 ──┤ calculating inert force │
                                   │
   P25 ──┤ calculating lifting force │
                                   │
   P26 ──┤ measuring contact force │
                                   │
                              ╭────┴─────╮
                              │   End    │
                              ╰──────────╯
```

[Fig.7]

[Fig.8]

[Fig.9]

[Fig.10]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11194059 A
- JP 2004301591 A
- JP 2001235310 A
- JP 2008185457 A
- JP 2008104312 A
- JP 2009244023 A